# EUROPEAN PATENT SPECIFICATION

(11) **EP 2 656 997 B1**
(45) Date of publication and mention of the grant of the patent: **12.08.2020**
(21) Application number: 12002833.7
(22) Date of filing: 23.04.2012
(51) Int. Cl.: B29C 45/14, H01H 33/662, B29C 45/16, B29C 45/00, B29C 45/27, B29K 105/12

(54) **Method for injection moulding of thermoplastic pole parts, and mould for proceeding the same**
Verfahren zum Spritzgießen thermoplastischer Stangenteile, und Form zur Herstellung davon
Procédé de moulage par injection de parties de pôle thermoplastiques et moule associé

(43) Date of publication of application: 30.10.2013
(73) Proprietor: ABB Schweiz AG, 5400 Baden (CH)
(72) Inventor: Klaska, Arne, Dr., 40235 Düsseldorf (DE); Gentsch, Dietmar, Dr.-Ing., 40882 Ratingen (DE); Bednarowski, Dariusz, 31-952 Krakow (PL); Malinowski, Lukasz, Dr., 30-504 Krakow (PL); Shang, Wenkai, Dr.-Ing., 40878 Ratingen (DE)
(74) Representative: Maiwald Patent- und Rechtsanwaltsgesellschaft mbH

(56) References cited:
- WO-A1-03/057448
- WO-A2-98/39150
- GB-A- 1 506 851
- JP-A- 8 252 838
- JP-A- 2001 179 786
- US-A1- 2008 142 485

## Description

The invention relates to a method for injection moulding of thermoplastic pole parts, with the use of a mould in which at least one vacuum interrupter and contact terminals are fixed during the moulding process, and with at least one injection opening/gate for injection of thermoplastic material into the mould, and mould for proceeding the same, according to the preamble of claims 1 and 8.

Injection moulding of medium voltage pole parts, for example to cover them with a thermoplastic housing is well known. In difference to the use of duroplastic material for a resin, the proceding pressure for thermoplastic material during the moulding is higher. One of the greatest advantages of thermoplastic housing is, that the manufacture times are shorter than the manufacture times for epoxy resin. Reason for that is, that epoxy resin needs longterm curing periodes and slow temperature curves. Thermoplastic material only has to become solid by cooling down.

Injection moulding technology for thermoplastic pole parts is used only with single injection gate or opening.

Furthermore due to inlays which are sensitive to pressure like for example the vacuum-interrupters, injection moulding is possible only to upper pressure limits.

The filling of a cavity depends on the behaviour and the properties of thermoplastic materials, in scope of their resulting viscosity.

So the disadvantages of the processes in the state of the art are the following:
The filling pressure decreases along flow path to low pressure at the end, caused by the viscosity of the thermoplastic material. This finally results in filling problems.

The maximum filling pressure inside the mould increases with height of the pole part or the pole part arrangement along the flow path.

Geometric constraints require inhomogeneous wall thickness along flow path, and therefore voids occur, and incomplete filling at dedicated pressures is the possible result.

The introduction of geometric reinforcement elements like fins etc. for strength and stiffness of pole part is almost impossible due to ineligible increase of cavity pressure.

Injection moulding of material with increased viscosity is with that known technology not possibleSo according to the fact, that the manufacture time cycles for thermoplastic covered pole parts are quite short, so dynamic effects like viscosity of the liquid hot thermoplastic material occur during the process.

An example for such a method according to the features of the preamble of claim 1 is know by the US 2008/0142485 A1

Therefore it is an object of the invention, to solve the problem with a controlled pressure gradient along the long axis of the moulded pole part, and to result in shorter process times as well as in a homogenous dissipation of material during the moulding process.

The inventive solution of that problem is defined by a method for injection moulding of thermoplastic pole parts as set out in claim 1 and a mould as set out in claim 8.

An advantageous embodiment is, that further injection gates are located at that points in the mould where are located nonflat topography. This enhances a complete filling without time loss also at region with complicated topography. This furthermore results in a better mechanical as well as a better reduction of voids.

A further embodiment of the invention is, that the injection openings are applied with shutters, by which the flux of injected hot thermoplastic material can independently be steered for each injection opening. By these shutters each injection opening or gate can be steered in the optimal way, and with consideration of pressure gradient along the flow path of thermoplastic material.

It is an advantageous embodiment, that the pressure in the injection openings or near to them are measured via pressure sensors in order to stear the injection of each injection opening e.g. each shutter according to a predetermined pressure gradient. In order to enhance the mechanical and the dielectric behavier and to cause reduction of voids of the pole part housing, the injected hot thermoplastic material is filled with particles or fibres, and that at least dedicated injection openings are applied with that, in order, to strengthen at least several regions of the pole part.

So in consequence of that, the injection gates are steered or driven via the shutter and the applied pressure in such a way, that the direction of the resulting material flow in the mould during the moulding process can be steared or optimized.

In order to use several material compounds it is advantageous, that at least two gates are applied with different hot thermoplastic material, in order to implement a two or more compound moulding during one moulding process.

According to a mould for the use of the method, the disclosure is, that the mould is applied with multiple injection gates at least along its long axis, for injection of hot thermoplastic material, and that at least one of the injection gates is applied with a steerable shutter.

A further advantageous embodiment to that is, that the shutter or the injection means are steered by steering means, in which a pressure and or flux pattern is predetermined.

A further advantageous embodiment is, that in the injection gates or corresponding with them pressure sensors are located, and that the pressure sensor values are feed into the steering means, in order to steer the shutter of injectors via a predetermined time/pressure pattern.

For all embodiments also film injection gates can be used.

One of the great advantages are, that thermoplastic pole parts for indoor application are using multiple injection gates, in order to reduce viscosity-dependant pressure gradient along the long axis of the mould, so that it results in more homogenous housing of the pole parts and improve filling of the mould.

By the fact, that the position of the injection openings or gates are choosen, it supports the alignment of inlays in the mould.

An embodiment of the disclosure is shown in the figures.
Figure 1: mould with several injection gates
Figure 2: state of the art
Figure 3: mould with additional use of inlays
Figure 4: mould with use of film injection gates

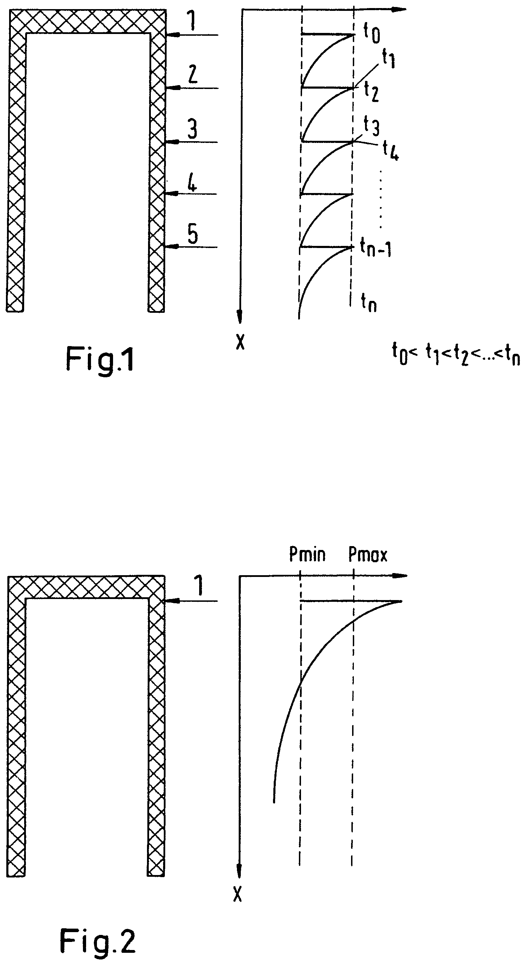

Figure 1 shows in principle a mould , with several injections openings or gates along the logaxis, of the mould, which is as well the flow path of the injected thermoplastic material. In the mould is not shown the inserted positioned vacuum interrupter, because it is not need to display it.

The injection gates 1, 2, 3, 4, 5 are applied in this case nearly equidistandly. But this is only an example, and it is not need in all cases to alligne them in that way in all cases. For example if regions of dense topography occur by given vacuum-interrupter- or inlay-construction the gates can be arranged nonequidistandly closes, that in other regions of the mould.

The effect of such an arrangement of injection gates is shown on the right side of figure 1. The diagram shows the pressure gradient along the long axis or the flow path of the injected thermoplastic material.

It is clear that the decrease of pressure caused by the viscosity of the thermoplastic material can be limited by the distance to the next injection gate.

Figure 2 shows according to figure 1 the comparison to the state of the art. Figure 2 shows a mould with only one injection gate 1. It is clear, that the pressure decreases along the flow path of the thermoplastic material.

So the difference becomes clear out the comparison of figure 1 with figure 2.

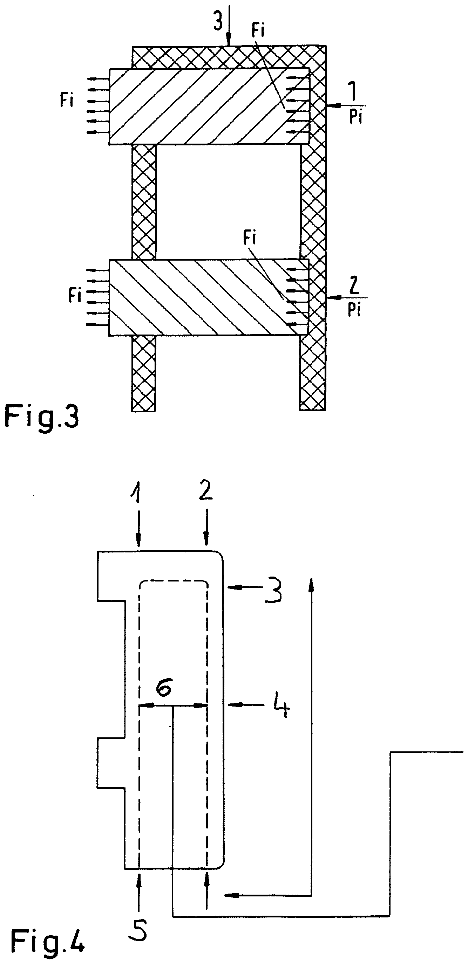

Figure 3 shows the use of additional inlays in the mould. This additional inlays the electric terminals of the pole part. So the injection gates are located in such, that they are positioned near to that inlays.

But a further detail in figure 3 is important. The injection gates 1, 2 are furthermore positioned in that way, that a force Fᵢ is caused by injected material in that way and in that direction, that the inlay will be pushed into its predetermined end position. This gives a high performance in sense final measures and positioning of the manufacture of a pole part.

So finally with the invention the following resulting important features and advantages can be summarized.
- An increased number of injection gates in the mould along the flow path.
- A location of injection gates will be selected in such a way, that a maximum filling pressure is reduced compared to single injection gate, and the flow of material is much more homogenous in sense of high mechanical performance of the housing of the pole part. Furthermore a control of maximum filling pressures is possible, in order to consider each pressure sensitive inlay in such a pole part. The control of pressure profile along flow path is also possible, at least to consider several topography of the inlays, or of the outer surface of the pole part housing.

- An almost constant filling pressure is possible, which keeps filling pressure inside mould at a dedicated level.
- An alignment of glas fibre around vacuum-interrupter optimized concerning dielctric and mechanical strength is possible also in case of influence of viscosity by such additives in the hot thermoplastic material.
- Furthermore a control of positions of weld lines by selection of moments for opening further gates, th.m. injection before or after flow front arrives at injection gate, is given, and a support of positioning, th.m. alignment to mould, or sealing, of inlays due to dedicated changes of filling direction is given by location of the injection gate beneficially on the opposite side of the inlay in the mould.
- Furthermore the use of a defined injection angle, actually used 90° versus axial direction of pole part, can be applied by and/or each of the injection gates.

So the combination with complex structure elements, also possibly be caused by reinforcement elements, fine structures, far projected fins for mechanical reinforcement of pole part housing or increased creepage length, can be used in this moulding process as well.

Figure 4 shows schematically an embodiment in use of the disclosure in case of general or additional film injection method. Film injection gates 1, 2, 3, 4, 5, 6 can be applied from the inner and/or the outer side of the mould.

They can be driven from the top or bottom side or as well from the sidewallposition or from the inner side of the so produced thermoplastic part. So all injection gates are steered in that way, described above.

## Claims

1. Method for injection moulding of thermoplastic pole parts, with the use of a mould in which at least one vacuum interrupter and contact terminals are fixed during the moulding procees, and with at least one injection opening for injection of thermoplastic material into the mould,
**characterized in**
**that** the mould is applied with multiple injection openings or gates (1,2), or film-injection gates at least along its long axis, for injection of hot thermoplastic material, and that the injection gates (1,2) can be steered or operated and are located in such a way, that they inject thermoplastic material with a defined time dependent injection pattern, that the injection openings are applied with shutters, by which the flux of injected hot thermoplastic material can independently be steered for each injection opening, and that additionally the contact terminals are positioned into the mould as inlays and injection gates (1,2) are located in such, that they are positioned near to that inlays and in that way, that a force Fi is caused by injected material in that way and in that direction, that the inlays will be pushed into their predetermined end positions.

2. Method according to claim 1,
**characterized in**
**that** further injection openings are located at that points in the mould where are located nonflat topography.

3. Method according to claim 1,
**characterized in**
**that** the pressure in the injection openings or gates (1,2) or near to them are measured via pressure sensors in order to steer the injection of each injection opening or gate e.g. each shutter according to a predetermined pressure gradient.

4. Method according to claim 1,
**characterized in**
**that** the injected hot thermoplastic material is filled with particles or fibres, and that at least dedicated injection openings or gates (1,2) are applied with that, in
order, to strengthen at least several regions of the pole part.

5. Method according to claim 1,
**characterized in**
**that** the injection openings are steered via the shutter and the applied pressure in such a way, that the direction of the resulting material flow in the mould during the moulding process can be steered.

6. Method according to claim 1,
**characterized in**
**that** at least two openings are applied with different hot thermoplastic material, in order to implement a two or more compound moulding during one moulding process.

7. Method according to claim 1,
**characterized in**
**that** the injection is operated by at least partly using film injection gates from the inner or outer side of the produced thermoplastic part.

8. Mould for the use of the method according to at least one of the aforesaid claims 1 to 7 for injection moulding of thermoplastic pole parts, in which at least one vacuum interrupter and contact terminals are fixed during the moulding procees, and with at least one injection opening or gate (1,2) for injection of thermoplastic material into the mould,
**characterized in**
**that** the mould is applied with multiple injection openings or gates (1,2) J Z at least along its long axis, for injection of hot thermoplastic material, and that at least one of the injection opening or gate (1,2) is applied with a steerable shutter, in such, that
the flux of injected hot thermoplastic material can independently be steered for each injection opening, and that additionally the contact terminals are positionable into the mould as inlays and injection gates are located in such, that they are positioned near to that inlays and in that way, that a force Fi is caused by injected material in that way and in that direction, that the inlay will be pushed into its predetermined end position.

9. Mould according to claim 8,
**characterized in**
**that** the shutter or the injection means are steered by steering means, in which a pressure and or flux pattern is predetermined.

10. Mould according to claim 9,
**characterized in**
**that** in the injection openings or corresponding with them pressure sensors are located, and that the pressure sensor values are feed into the steering means, in order to stear the shutter of injectors via a predetermined time/pressure pattern.

11. Mould according to one of the claims 8 to 10,
**characterized in**
**that** at least a part of the injection gates (1,2) are applied as film injection gates.

## Patentansprüche

1. Verfahren zum Spritzgießen thermoplastischer Stangenteile, unter Verwendung einer Form, in der zumindest ein Vakuum-Trennschalter und Kontaktanschlüsse während des Gießprozesses fixiert sind, und mit zumindest einer Einspritzöffnung zur Einspritzung von thermoplastischem Material in die Form,
**dadurch gekennzeichnet, dass**
die Form mit mehreren Einspritzöffnungen oder -löchern (1, 2) oder Folienhinterspritzlöchern zumindest entlang ihrer langen Achse versehen ist, zur Einspritzung von heißem thermoplastischem Material, und dass die Einspritzlöcher (1, 2) in einer solchen Weise gesteuert oder betrieben werden können und so befindlich sind, dass sie thermoplastisches Material mit einer definierten Zeit in Abhängigkeit vom Einspritzmuster einspritzen, dass die Einspritzöffnungen mit Verschlüssen versehen sind, durch die der Fluss des eingespritzten heißen thermoplastischen Materials für jede Einspritzöffnung unabhängig gesteuert werden kann, und dass
zusätzlich die Kontaktanschlüsse in der Form als Einlagen positioniert sind und Einspritzlöcher (1, 2) so platziert sind, dass sie nahe den Einlagen positioniert sind, und dass auf diese Weise eine Kraft Fi durch das eingespritzte Material in dieser Weise und in dieser Richtung verursacht wird, dass die Einlagen in ihre vorbestimmten Endpositionen gedrückt werden.

2. Verfahren nach Anspruch 1,
**dadurch gekennzeichnet, dass**
weitere Einspritzöffnungen an den Punkten in der Form platziert sind, wo sich eine nicht-flache Topografie befindet.

3. Verfahren nach Anspruch 1,
**dadurch gekennzeichnet, dass**
der Druck in den Einspritzöffnungen oder -löchern (1, 2) oder in deren Nähe über Drucksensoren gemessen wird, um die Einspritzung jeder Einspritzöffnung oder jedes Einspritzlochs zu steuern, z. B. jeden Verschluss entsprechend einem vorbestimmten Druckgradienten.

4. Verfahren nach Anspruch 1,
**dadurch gekennzeichnet, dass**
das eingespritzte heiße thermoplastische Material mit Partikeln oder Fasern gefüllt ist, und dass zumindest spezielle Einspritzöffnungen oder -löcher (1, 2) damit versehen sind, um zumindest mehrere Bereiche des Stangenteils zu verstärken.

5. Verfahren nach Anspruch 1,
**dadurch gekennzeichnet, dass**
die Einspritzöffnungen über den Verschluss und den angewendeten Druck in einer Weise gesteuert werden, dass die Richtung des resultierenden Materialflusses in der Form während des Gießprozesses gesteuert werden kann.

6. Verfahren nach Anspruch 1,
**dadurch gekennzeichnet, dass**
mindestens zwei Öffnungen mit unterschiedlichem heißem thermoplastischem Material versorgt werden, um während eines Gießprozesses ein Gießen mit zwei oder mehr Gießmassen umzusetzen.

7. Verfahren nach Anspruch 1,
**dadurch gekennzeichnet, dass**
die Einspritzung zumindest teilweise unter Verwendung von Folienhinterspritzlöchern von der Innenseite oder Außenseite des produzierten thermoplastischen Teils betrieben wird.

8. Form zur Verwendung des Verfahrens nach einem der vorgenannten Ansprüche 1 bis 7, zum Spritzgießen von thermoplastischen Stangenteilen, wobei zumindest ein Vakuum-Trennschalter und Kontaktanschlüsse während des Gießprozesses fixiert werden, und mit zumindest einer Einspritzöffnung oder einem Einspritzloch (1, 2) zur Einspritzung von thermoplastischem Material in die Form, **dadurch gekennzeichnet, dass**
die Form mit mehreren Einspritzöffnungen oder -löchern (1, 2) zumindest entlang ihrer Längsachse versehen ist, zur Einspritzung von heißem thermoplastischem Material, und dass zumindest eine der Einspritzöffnungen oder eines der Einspritzlöcher (1, 2) mit einem steuerbaren Verschluss versehen ist, dahingehend, dass der Fluss von eingespritztem heißem thermoplastischem Material für jede Einspritzöffnung unabhängig gesteuert werden kann; und dass zusätzlich die Kontaktanschlüsse in der Form als Einlagen positionierbar sind und dass die Einspritzlöcher so platziert sind, dass sie nahe den Einlagen positioniert sind, und dass auf diese Weise eine Kraft Fi durch das eingespritzte Material in dieser Weise und in dieser Richtung verursacht wird, dass die Einlage in ihre vorbestimmte Endposition gedrückt wird.

9. Form nach Anspruch 8,
**dadurch gekennzeichnet, dass**
der Verschluss oder das Einspritzmittel durch Steuerungsmittel gesteuert werden, wobei ein Druck und/oder ein Flussmuster vorbestimmt sind.

10. Form nach Anspruch 9,
**dadurch gekennzeichnet, dass**
in den Einspritzöffnungen oder ihnen entsprechend Drucksensoren platziert sind, und dass die Drucksensorwerte in die Steuerungsmittel eingespeist werden, um den Verschluss der Einspritzdüsen über ein vorbestimmtes Zeit/Druck-Muster zu steuern.

11. Form nach einem der Ansprüche 8 bis 10,
**dadurch gekennzeichnet, dass**
zumindest ein Teil der Einspritzlöcher (1, 2) als Folienhinterspritzlöcher ausgeführt sind.

## Revendications

1. Procédé de moulage par injection de parties polaires en matériau thermoplastique, avec utilisation d'un moule dans lequel sont fixés au moins un interrupteur à vide et des bornes de contact pendant le processus de moulage, et avec au moins une ouverture d'injection pour l'injection de matériau thermoplastique dans le moule,
**caractérisé en ce que** le moule est appliqué avec de multiples ouvertures ou portes d'injection (1, 2), ou portes d'injection de film au moins le long de son axe longitudinal, pour l'injection de matériau thermoplastique chaud, et **en ce que** les portes d'injection (1, 2) peuvent être commandées ou actionnées et sont situées de telle manière qu'elles injectent du matériau thermoplastique selon un schéma d'injection, dépendant du temps, défini, que les ouvertures d'injection sont appliquées avec des obturateurs, au moyen desquels le flux de matériau thermoplastique chaud injecté peut être commandé indépendamment pour chaque ouverture d'injection, et qu'en outre les bornes de contact sont positionnées dans le moule comme des incrustations et les portes d'injection (1, 2) sont situées de telle sorte qu'elles sont positionnées à proximité de ces incrustations et de manière qu'une force Fi est provoquée par la matière injectée de cette manière et dans cette direction, que les incrustations seront poussées dans leurs positions finales prédéterminées.

2. Procédé selon la revendication 1,
**caractérisé en ce que** des ouvertures d'injection supplémentaires sont situées aux points du moule où une topographie non plane est située.

3. Procédé selon la revendication 1,
**caractérisé en ce que**
la pression dans les ouvertures ou les portes d'injection (1, 2) ou à proximité de celles-ci est mesurée par l'intermédiaire de capteurs de pression afin de commander l'injection de chaque ouverture ou porte d'injection, par exemple, chaque obturateur en fonction d'un gradient de pression prédéterminé.

4. Procédé selon la revendication 1,
**caractérisé en ce que**
le matériau thermoplastique chaud injecté est rempli de particules ou de fibres, et
au moins des ouvertures ou portes d'injection (1, 2) dédiés sont appliquées avec cela, afin de renforcer au moins plusieurs régions de la partie polaire.

5. Procédé selon la revendication 1,
**caractérisé en ce que** les ouvertures d'injection sont commandées par l'intermédiaire de l'obturateur et de la pression appliquée de telle manière que la direction du flux de matière résultant dans le moule pendant le processus de moulage peut être commandée.

6. Procédé selon la revendication 1,
**caractérisé en ce qu'**au moins deux ouvertures sont appliquées avec un matériau thermoplastique chaud différent, afin de mettre en œuvre un moulage composé de deux ou plus de deux pièces au cours d'un processus de moulage.

7. Procédé selon la revendication 1,
**caractérisé en ce que**
l'injection est effectuée, au moins en partie, au moyen de portes d'injection de film depuis le côté intérieur ou extérieur de la pièce thermoplastique produite.

8. Moule pour l'utilisation du procédé selon au moins l'une des revendications 1 à 7 ci-dessus, pour le moulage par injection de parties polaires en matériau thermoplastique, dans lequel au moins un interrupteur à vide et des bornes de contact sont fixés pendant le processus de moulage, et avec au moins une ouverture d'injection ou des portes d'injection (1, 2) pour l'injection de matériau thermoplastique dans le moule,
**caractérisé en ce que**
le moule est appliqué avec de multiples ouvertures ou portes d'injection (1, 2) au moins le long de son axe longitudinal, pour l'injection de matériau thermoplastique chaud, et **en ce qu'**au moins l'une de l'ouverture ou de la porte d'injection (1, 2) est appliquée avec un obturateur commandable, de telle sorte que le flux de matériau thermoplastique chaud injecté peut être commandé indépendamment pour chaque ouverture d'injection, et **en ce qu'**en outre les bornes de contact peuvent être positionnées dans le moule comme des incrustations et des portes d'injection sont situées de telle sorte qu'elles sont positionnées à proximité de ces incrustations et de manière à ce qu'une force Fi soit provoquée par la matière injectée de cette manière et dans cette direction, que l'incrustation soit poussée dans sa position finale prédéterminée.

9. Moule selon la revendication 8,
**caractérisé en ce que**
l'obturateur ou les moyens d'injection sont commandés par des moyens de commande, dans lesquels un schéma de pression et/ou de flux est prédéterminé.

10. Moule selon la revendication 9,
**caractérisé en ce que**
dans les ouvertures d'injection ou correspondant à celles-ci se trouvent des capteurs de pression, et **en ce que** les valeurs des capteurs de pression sont transmises aux moyens de commande, afin de commander l'obturateur des injecteurs par l'intermédiaire d'un schéma temps/pression prédéterminé.

11. Moule selon l'une des revendications 8 à 10,
**caractérisé en ce qu'**au moins une partie des portes d'injection (1, 2) sont appliquées comme des portes d'injection de film.
